# EUROPÄISCHE PATENTANMELDUNG

(11) **EP 3 936 337 A1**
(43) Veröffentlichungstag der Anmeldung: **12.01.2022**
(21) Anmeldenummer: 21183595.4
(22) Anmeldetag: 05.07.2021
(51) Int. Cl.: B32B 33/00, B32B 15/08, B32B 15/12, B32B 15/20, B32B 27/08, B32B 27/10, B32B 29/00, B65D 65/40

(54) **EINMALBEUTEL FÜR EIN HÄNDEDESINFEKTIONSMITTEL**

(30) Priorität: 05.07.2020 AT 5013520 U
(71) Anmelder: Hollu Systemhygiene GmbH, 6170 Zirl (AT)
(72) Erfinder: Meinschad, Simon, 6421 Rietz (AT); Rupprich, Marco, 6094 Axams (AT)
(74) Vertreter: Schwarz & Partner Patentanwälte GmbH

(57) **Zusammenfassung**

Die Erfindung betrifft einen Einmalbeutel (1) für ein Händedesinfektionsmittel, wobei der Einmalbeutel (1) einen verschlossenen Hohlraum (5) für das Händedesinfektionsmittel aufweist, wobei die Wände (3) des Einmalbeutels (1) ein zumindest vierlagiges Laminat aufweisen, wobei das Laminat zumindest zwei Schichten (12, 14) aus Kunststoff, zumindest eine Schicht (11) aus Papier und zumindest eine Schicht (13) aus Aluminium umfasst, wobei die im Einmalbeutel (1) innenliegende Schicht (14) aus Kunststoff und die im Einmalbeutel (1) außenliegende Schicht (11) aus Papier besteht. Außerdem betrifft die Erfindung einen Einmalbeutel (1), welcher ein Händedesinfektionsmittel beinhaltet.

## Beschreibung

Die Erfindung betrifft einen Einmalbeutel für ein Händedesinfektionsmittel. Weiters betrifft die Erfindung einen Einmalbeutel beinhaltend ein Händedesinfektionsmittel.

### HINTERGRUND DER ERFINDUNG

Händedesinfektionsmittel erlauben eine zuverlässige Deaktivierung bzw. Abtötung von Bakterien, Pilzen oder Viren auf der Haut und sind ein effektives Mittel, um einer Keimübertragung vorzubeugen. Für eine ausreichende Desinfektion muss eine Mindestmenge an Händedesinfektionsmittel aufgetragen und über eine gewisse Zeitdauer in die Hände eingerieben werden.

An stationären Abgabevorrichtungen für Desinfektionsmittel stellen Dosieranlagen oder Pumpen sicher, dass eine ausreichende Menge an Desinfektionsmittel abgegeben wird. Abgabevorrichtungen, bei welchen die Abgabemenge des Desinfektionsmittels eingestellt und somit die Verwendung der Mindestmenge garantiert werden kann, sind oft sperrig, fix an einer Wand befestigt oder benötigen eine Stromquelle und können daher nicht mitgenommen werden.

Die Dosierung einer ausreichenden Menge an Desinfektionsmittel stellt sich bei mobilen Spendern oft problematisch dar. Kleine Fläschchen mit Händedesinfektionsmittel können zwar einfach überallhin mitgeführt werden, erlauben aber keine eingestellte Dosierung des Desinfektionsmittels. Zumeist wird vom Anwender eine zu geringe Menge an Desinfektionsmittel verwendet, wodurch nicht alle wesentlichen Erreger auf den Händen abgetötet werden. Außerdem bieten mobile Spender keinen zuverlässigen Schutz vor einem Auslaufen des Händedesinfektionsmittels beispielsweise in Handtaschen, in welchen die Fläschchen zur Mitnahme aufbewahrt werden. Das Desinfektionsmittel kommt in solchen Fläschchen durch das regelmäßige Öffnen immer wieder mit Luft in Kontakt. Dadurch verflüchtigen sich die im Desinfektionsmittel enthaltenen Alkohole schnell und die desinfizierende Wirkung verringert sich.

Einmalbeutel, die ein Händedesinfektionsmittel beinhalten, sind inzwischen ebenfalls erhältlich, allerdings haben sich diese als nicht besonders zweckmäßig erwiesen. Derartige Einmalbeutel bestehen aus Kunststoff, welcher eine gewisse Mindeststärke aufweisen muss, damit der Kunststoffbeutel die leichtentzündlichen, kurzkettigen Alkohole sicher aufnimmt und auch bei Stößen, wie sie im Alltag auftreten können, den Inhalt sicher bewahrt. Daher sind die verwendeten Kunststofffolien relativ dick, was das Aufreißen der Beutel erschwert. Solche Beutel werden zur Lösung dieses Problems mit einer Einrisskerbe versehen, damit sie vom Benutzer leicht geöffnet werden können. Die Einbringung solcher Einrisskerben stellt allerdings einen zusätzlichen Produktionsschritt dar. Außerdem kann der Einmalbeutel nur an jener Stelle geöffnet werden, an der sich die Einrisskerbe befindet. Dies erschwert die Handhabung und es kann zu einem Verschütten von Desinfektionsmittel kommen.

### KURZBESCHREIBUNG DER ERFINDUNG

Aufgabe der vorliegenden Erfindung ist es daher ein luftdichtes und flüssigkeitsundurchlässiges Behältnis für Händedesinfektionsmittel bereitzustellen, mit welchem die Mindestmenge an Händedesinfektionsmittel optimal gewährleistet werden kann, welches sehr platzsparend mitgeführt werden kann und welches eine äußerst einfache Entnahme des Desinfektionsmittels erlaubt.

Gelöst wird diese Aufgabe durch einen Einmalbeutel für ein Händedesinfektionsmittel, wobei der Einmalbeutel einen verschlossenen Hohlraum für das Händedesinfektionsmittel aufweist, in welchem das Händedesinfektionsmittel eingeschlossen ist, dadurch gekennzeichnet, dass die Wände des Einmalbeutels ein zumindest vierlagiges Laminat aufweisen, wobei das Laminat zumindest zwei Schichten aus Kunststoff, zumindest eine Schicht aus vorzugsweise bedruckbarem Papier und zumindest eine Schicht aus Aluminium umfasst, wobei die innenliegende Schicht aus Kunststoff und die außenliegende Schicht aus dem Papier besteht.

Gelöst wird diese Aufgabe außerdem durch einen Einmalbeutel beinhaltend ein Händedesinfektionsmittel, wobei der Einmalbeutel einen verschlossenen Hohlraum aufweist, in welchem das Händedesinfektionsmittel eingeschlossen ist, dadurch gekennzeichnet, dass die Wände des Einmalbeutels ein zumindest vierlagiges Laminat aufweisen, wobei das Laminat zumindest zwei Schichten aus Kunststoff, zumindest eine Schicht aus vorzugsweise bedruckbarem Papier und zumindest eine Schicht aus Aluminium umfasst, wobei die innenliegende Schicht aus Kunststoff und die außenliegende Schicht aus dem Papier besteht.

Das zumindest vierlagige Laminat ermöglicht einen luftdichten und flüssigkeitsundurchlässigen Einmalbeutel. Genauer gesagt, dient die innenliegende Schicht aus Kunststoff dem luftdichten Verschluss und die zumindest eine Schicht aus Aluminium bildet eine Dampfsperre. Daher kann der Einmalbeutel sehr lange mitgeführt werden, ohne dass das Händedesinfektionsmittel seine Wirkung verliert. Die zusätzliche Schicht aus Papier ermöglicht nicht nur ein einfaches Bedrucken des Einmalbeutels, sondern sie hat den zusätzlichen Effekt einer Versteifung, welche die Druckfestigkeit erhöht, gleichzeitig aber das Einreißen an den Seitenrändern erleichtert. Ein solcher Einmalbeutel ist daher an allen Stellen des Seitenrands einreißbar und kommt ohne definierte Einreißkerbe aus. Das zumindest vierlagige Laminat weist bevorzugt von innen nach außen die Folge: Schicht aus Kunststoff, Schicht aus Aluminium, Schicht aus Kunststoff, Schicht aus Papier auf.

In einer Ausführungsvariante ist daher vorgesehen, dass der Einmalbeutel Seitenränder hat, die keine Einreißkerbe aufweisen.

Des Weiteren kann der Einmalbeutel gewellte Seitenränder bzw. einen gewellten Umfang aufweisen.

Der Einmalbeutel ist mit einer oberen Wand und eine untere Wand ausgestattet, welche im Wesentlichen deckungsgleich aufeinanderliegen, wobei der Hohlraum zwischen der oberen Wand und der unteren Wand gebildet wird, wobei die obere Wand und die untere Wand als zumindest vierlagige Laminate ausgebildet sind und jeweils eine Schicht aus Kunststoff der oberen Wand und eine Schicht aus Kunststoff der unteren Wand einander zugerichtet sind, wobei die obere Wand und die untere Wand miteinander an den Seitenrändern verschweißt sind. Bevorzugt bilden die Seitenränder eine Schweißnaht entlang des gesamten Umfangs der Wände.

Besonders bevorzugt weist der Hohlraum des Einmalbeutels ein Volumen von 2,5 bis 15 ml auf. Ein Volumen von 3 ml entspricht der empfohlenen Mindestmenge an Händedesinfektionsmittel, welche eine wirksame und normgerechte Desinfektion der Hände gewährleistet. Eine Menge von 3 ml wird für eine hygienische Handdesinfektion auch von der Weltgesundheitsorganisation empfohlen. Daher wird eine fehlerhafte Anwendung von Händedesinfektionsmittel durch die Verwendung von zu wenig Desinfektionsmittel mithilfe der erfindungsgemäßen Einmalbeutel vermieden. Für andere Anwendungen können die Einmalbeutel auch ein größeres Füllvolumen aufweisen.

In einer weiteren Ausführungsvariante handelt es sich bei dem Papier um bedruckbares Papier. Das Papier kann z.B. Rohpapier sein. Rohpapier kann sehr gut bedruckt werden und erlaubt daher eine beliebige grafische Gestaltung der Außenseite des Einmalbeutels. Aufgrund des erfindungsgemäßen Laminataufbaus bietet das Rohpapier als außenliegende Schicht genügend Stabilität.

In einer bevorzugten Ausführungsvariante handelt es sich bei dem Kunststoff um ein Polyolefin. Besonders bevorzugt ist der Kunststoff Polyethylen. Polyethylen erlaubt einerseits einen luftdichten Verschluss des Desinfektionsmittels und harmoniert hinsichtlich des Reißverhaltens mit Papier. Dadurch lässt sich der Einmalbeutel einfach aufreißen und es wird keine Einreißkerbe benötigt. Außerdem ist Polyethylen beständig gegen Alkohole und kann somit als innenliegende Schicht des Laminats verwendet werden, welche die Kontaktschicht zum Desinfektionsmittel bildet.

Besonders bevorzugt weist das Händedesinfektionsmittel eine Mischung aus n-Propanol und 2-Propanol (Isopropanol) auf. Ein Gesamtalkoholgehalt von 60 bis 80 Gew.% ist dabei bevorzugt. Besonders bevorzugt weist das Händedesinfektionsmittel 45 bis 60 Gew.% 2-Propanol, 5 bis 20 Gew.% n-Propanol und zumindest einen Rückfetter auf. Diese Zusammensetzung ermöglicht ein großes Wirkspektrum und damit die Inaktivierung einer Vielzahl von verschiedenen Erregern. Da die Anwendung von Händedesinfektionsmittel die Haut angreift und der enthaltende Alkohol die Haut entfettet, umfasst das Händedesinfektionsmittel bevorzugt rückfettende Komponenten.

Besonders bevorzugt handelt es sich bei dem Händedesinfektionsmittel um ein Gel. Dieses lässt sich leichter aus dem Einmalbeutel auf die Hände auftragen.

Eine weitere Ausführungsvariante des erfindungsgemäßen Einmalbeutels sieht vor, dass zwischen der innenliegenden Schicht und der außenliegenden Schicht eine Schicht aus Aluminium und eine Schicht aus Kunststoff, vorzugsweise Polyethylen, eingeschlossen sind. Die an die innenliegende Schicht angrenzende Aluminium-Schicht bildet dabei eine Dampfsperre für das Desinfektionsmittel. Die zweite Kunststoff-Schicht kann Polyethylen umfassen und ermöglicht eine Verbindung zwischen der Aluminium-Schicht und der außenliegenden Schicht aus Papier.

Weiters kann die innenliegende Schicht aus Kunststoff eine Stärke von 35 bis 45 µm, die Schicht aus Aluminium eine Stärke von 5 bis 10 µm, die zweite Schicht aus Kunststoff eine Stärke von 8 bis 16 µm und die außenliegende Schicht aus Papier eine Stärke von 35 bis 45 µm aufweisen.

Je nach verwendetem Material würde somit die innenliegende Schicht ein Flächengewicht von 35 bis 45 g/m², die Schicht aus Aluminium ein Flächengewicht von 17 bis 21 g/m², die zweite Schicht aus Kunststoff ein Flächengewicht von 8 bis 16 g/m² und die außenliegende Schicht ein Flächengewicht von 35 bis 45 g/m² aufweisen.

Das heißt der Einmalbeutel weist bevorzugt eine Gesamtstärke von 83 bis 116 µm und ein Gesamtflächengewicht von 95 bis 127 g/m² auf. Diese Ausführung ergibt einen möglichst leichten und dünnen Einmalbeutel, welcher dennoch die Erfordernisse der Luftdichtheit und Flüssigkeitsundurchlässigkeit erfüllt.

In einer Ausführungsvariante ist vorgesehen, dass der Einmalbeutel im Wesentlichen rechteckig ausgebildet ist, wobei vorzugweise die Länge 5 bis 12 cm und die Breite 2 bis 8 cm beträgt.

In einer besonders bevorzugten Ausführungsvariante kann der Einmalbeutel an jeder beliebigen Stelle zur Entnahme des Händedesinfektionsmittels von Hand eingerissen werden. Das heißt, der Einmalbeutel muss keine definierte Einreißkerbe aufweisen, an welcher das Einreißen erfolgen muss. Durch die Materialwahl des zumindest vierlagigen Laminats kann der Einmalbeutel sehr einfach an jeglicher Stelle eingerissen werden. Das Händedesinfektionsmittel kann somit sehr einfach und schnell mithilfe des Einmalbeutels angewendet werden. Das Laminat muss sich daher bis an die Seitenränder erstrecken, damit es dann zum Einreißen auch zugänglich ist.

Außerdem kann die außenliegende Schicht des Einmalbeutel beidseitig bedruckt sein. Bevorzugt weist die außenliegende Schicht eine Vorder- und Rückseite auf. Die Vorderseite kann dann mit Produktbezeichnung und Verwendungszweck bedruckt werden, wobei auch diverse Firmeninformationen angeführt werden können. Die Rückseite kann mit den notwendigen Daten hinsichtlich Biozidverordnungen und CLP-Verordnung (Einstufung, Kennzeichnung und Verpackung von Stoffen und Gemischen) bedruckt werden.

### DETAILLIERTE BESCHREIBUNG DER ERFINDUNG

Weitere Details und Vorteile der Erfindung ergeben sich aus den nachfolgenden Figuren und der dazugehörigen Figurenbeschreibung.
- Fig. 1: zeigt eine Sicht auf einen schematisch dargestellten erfindungsgemäßen Einmalbeutel für Händedesinfektionsmittel.
- Fig. 2: zeigt schematisch eine Darstellung des Laminataufbaus des erfindungsgemäßen Einmalbeutels im Querschnitt.
- Fig. 3: zeigt eine Sicht auf einen schematisch dargestellten erfindungsgemäßen Einmalbeutel für Händedesinfektionsmittel mit gewellten Seitenrändern bzw. gewelltem Umfang.

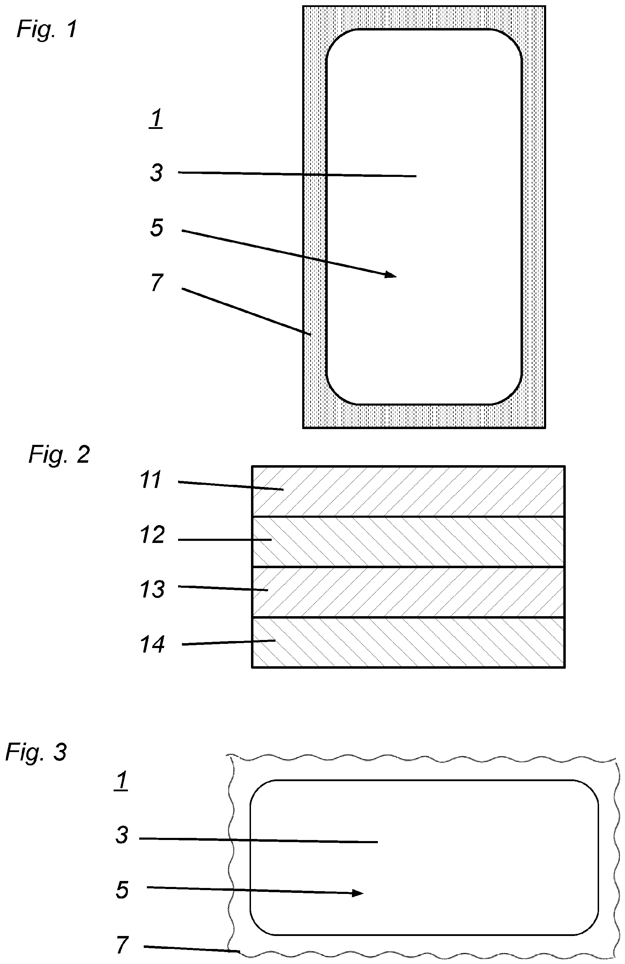

Die Fig. 1 zeigt schematisch einen erfindungsgemäßen Einmalbeutel 1 für ein Händedesinfektionsmittel bzw. mit einem Desinfektionsmittel. Der Einmalbeutel 1 weist einen verschlossenen Hohlraum 5 für das Händedesinfektionsmittel auf.

Die obere Wand 3 und die untere Wand 3 des Einmalbeutels 1 bestehen aus einem zumindest vierlagigen Laminat (siehe dazu auch Fig. 2). Der Einmalbeutel 1 weist Wände 3 aus zwei im Wesentlichen deckungsgleichen zumindest vierlagigen Laminate auf, wobei die Schicht 14 aus Kunststoff von der oberen Wand der Schicht 14 der unteren Wand zugewandt ist. Die beiden Wände 3 sind über die Schicht 14 aus Kunststoff miteinander verschweißt. Die Schweißnaht bildet die Seitenränder 7 des Einmalbeutels 1.

Im vorliegenden Beispiel ist der Einmalbeutel 1 als Rechteck ausgebildet und die Schweißnaht, welche die Seitenränder 7 bildet, verläuft entlang des gesamten Umfang der Wände bzw. des Rechtecks. Dies ist allerdings nicht zwingend erforderlich, beispielsweise kann die Schweißnaht bei einem Rechteck auch nur an drei Seiten verlaufen, wenn die obere Wand 3 und die untere Wand 3 des Einmalbeutels 1 aus einem einzelnen Laminat durch eine Faltnaht gebildet werden, sodass ein Seitenrand von einer Faltung gebildet wird. Auch kann die Schweißnaht nur an zwei Seitenrändern verlaufen, z.B. dann wenn die obere Wand 3 und die untere Wand 3 durch einen flachgedrückten Schlauch gebildet werden, der an den beiden offenen Enden verschweißt wird.

Der gebildete Hohlraum 5 des Einmalbeutels 1 weist hier ein Volumen von 3,2 ml auf. Damit ist gewährleistet, dass trotz Verlusten des Desinfektionsmittels durch Adhäsion an der Innenseite des Beutels 1 zumindest 3 ml beim Benutzer zur Verfügung stehen.

Der Einmalbeutel 1 weist an den Seitenrändern 7 keine Einreißkerbe auf.

Die Seitenränder 7 des erfindungsgemäßen Einmalbeutels 1 können wie in Fig. 3 schematisch dargestellt auch gewellt sein.

In Fig. 2 ist der Laminataufbau des Einmalbeutels 1 gezeigt und zwar in Form eines Querschnitts durch die Wand 3 des Einmalbeutels. Die oberste Schicht zeigt die äußere nach außen gerichtete Schicht 11 aus bedruckbarem Papier. Auf diese folgt eine Schicht 12 aus dem Kunststoff Polyethylen, einem Polyolefin. Daran schließt eine Schucht 13 aus Aluminium an, welche eine Dampfsperre darstellt. Die letzte, nach Innen den Hohlraum 5 begrenzende Schicht 14 ist erneut aus Polyethylen aufgebaut.

Bei der Schicht 11 aus Papier handelt es sich um bedruckbares Papier, wie Rohpapier. Papier verleiht dem Einmalbeutel 1 eine Steifigkeit, um den Einmalbeutel 1 entlang der Seitenränder 7 einreisen zu können, gleichzeitig verleiht die Schicht 11 aus Papier eine zusätzliche Stabilität für die Lagerung des Einmalbeutels 1.

Im Innenraum 5 befindet sich das Händedesinfektionsmittel, welches eine Mischung aus n-Propanol und 2-Propanol (Isopropanol) darstellt. Im Unterschied zu Ethanol haben Propanole eine etwas höhere desinfizierende Wirkung.

Die innenliegende Schicht 14 aus Kunststoff weist eine Stärke von 35 bis 45 µm, die Schicht 13 aus Aluminium eine Stärke von 5 bis 10 µm, die zweite Schicht 12 aus Kunststoff eine Stärke von 8 bis 16 µm und die außenliegende Schicht 11 aus Papier eine Stärke von 35 bis 45 µm auf. Demzufolge ist erkennbar, dass die Fig. 2 nur schematisch den Aufbau, nicht aber die Dickenverhältnisse darstellt.

## Patentansprüche

1. Einmalbeutel (1) für ein Händedesinfektionsmittel, wobei der Einmalbeutel (1) einen verschlossenen Hohlraum (5) für das Händedesinfektionsmittel aufweist, **dadurch gekennzeichnet, dass** die Wände (3) des Einmalbeutels (1) ein zumindest vierlagiges Laminat aufweisen, wobei das Laminat zumindest zwei Schichten (12, 14) aus Kunststoff, zumindest eine Schicht (11) aus Papier und zumindest eine Schicht (13) aus Aluminium umfasst, wobei die im Einmalbeutel (1) innenliegende Schicht (14) aus Kunststoff und die im Einmalbeutel (1) außenliegende Schicht (11) aus Papier besteht.

2. Einmalbeutel (1) beinhaltend ein Händedesinfektionsmittel, wobei der Einmalbeutel (1) einen verschlossenen Hohlraum (5) aufweist, in welchem das Händedesinfektionsmittel eingeschlossen ist, **dadurch gekennzeichnet, dass** die Wände (3) des Einmalbeutels (1) ein zumindest vierlagiges Laminat aufweisen wobei das Laminat zumindest zwei Schichten (12, 14) aus Kunststoff, zumindest eine Schicht aus Papier (11) und zumindest eine Schicht (13) aus Aluminium umfasst, wobei die im Einmalbeutel (1) innenliegende Schicht (14) aus Kunststoff und die im Einmalbeutel (1) außenliegende Schicht (11) aus Papier besteht.

3. Einmalbeutel nach Anspruch 1 oder Anspruch 2, **dadurch gekennzeichnet, dass** der Einmalbeutel (1) eine obere Wand (3) und eine untere Wand (3) aufweist, welche zwei im Wesentlichen deckungsgleiche zumindest vierlagige Laminate sind, wobei bei der oberen Wand (3) und der unteren Wand (3) die innenliegenden Schichten (14) aus Kunststoff miteinander über eine Schweißnaht miteinander verschweißt sind und den verschlossenen Hohlraum (5) einschließen, wobei die Schweißnaht die Seitenränder (7) des Einmalbeutels (1) bilden.

4. Einmalbeutel nach Anspruch 3, **dadurch gekennzeichnet, dass** die Schweißnaht entlang des gesamten Umfangs des Einmalbeutels (1) verläuft.

5. Einmalbeutel nach einem der Ansprühe 1 bis 4, **dadurch gekennzeichnet, dass** der Hohlraum (5) des Einmalbeutels ein Volumen von 2,5 bis 15 ml aufweist.

6. Einmalbeutel nach einem der Ansprüche 1 bis 5, **dadurch gekennzeichnet, dass** es sich bei dem Papier um bedruckbares Papier, vorzugsweise um Rohpapier handelt.

7. Einmalbeutel nach einem der Ansprüche 1 bis 6, **dadurch gekennzeichnet, dass** es sich bei dem Kunststoff um ein Polyolefin, vorzugsweise um Polyethylen handelt.

8. Einmalbeutel nach einem der Ansprüche 2 bis 7, **dadurch gekennzeichnet, dass** das Händedesinfektionsmittel eine Mischung aus n-Propanol und 2-Propanol (Isopropanol) aufweist.

9. Einmalbeutel nach Anspruch 8, **dadurch gekennzeichnet, dass** das Händedesinfektionsmittel 45 bis 60 Gew.% 2-Propanol, 5 bis 20 Gew.% n-Propanol und zumindest einen Rückfetter aufweist.

10. Einmalbeutel nach einem der Ansprüche 2 bis 9, **dadurch gekennzeichnet, dass** das Händedesinfektionsmittel einen Gesamtalkoholgehalt von 60 bis 80 Gew.% aufweist.

11. Einmalbeutel nach einem der Ansprüche 2 bis 10, **dadurch gekennzeichnet, dass** es sich bei dem Händedesinfektionsmittel um ein Gel handelt.

12. Einmalbeutel nach einem der Ansprüche 1 bis 11, **dadurch gekennzeichnet, dass** die innenliegende Schicht (14) aus Kunststoff eine Stärke von 35 bis 45 µm, die Schicht (13) aus Aluminium eine Stärke von 5 bis 10 µm, die zweite Schicht (12) aus Kunststoff eine Stärke von 8 bis 16 µm und die außenliegende Schicht (11) aus Papier eine Stärke von 35 bis 45 µm aufweisen.

13. Einmalbeutel nach einem der Ansprüche 1 bis 12, **dadurch gekennzeichnet, dass** die innenliegende Schicht (14) aus Kunststoff ein Flächengewicht von 35 bis 45 g/m², die Schicht (13) aus Aluminium ein Flächengewicht von 17 bis 21 g/m², die zweite Schicht (12) aus Kunststoff ein Flächengewicht von 8 bis 16 g/m² und die außenliegende Schicht (11) aus Papier ein Flächengewicht von 35 bis 45 g/m² aufweisen.

14. Einmalbeutel nach einem der Ansprüche 1 bis 13, **dadurch gekennzeichnet, dass** der Einmalbeutel (1) Seitenränder (7) hat, die keine Einreißkerbe aufweisen.

15. Einmalbeutel nach einem der Ansprüche 1 bis 14, **dadurch gekennzeichnet, dass** der Einmalbeutel (1) gewellte Seitenränder (7) aufweist.
